# EUROPEAN PATENT APPLICATION

(11) **EP 4 844 520 A1**
(43) Date of publication of application: **25.11.2026**
(21) Application number: 26174699.4
(22) Date of filing: 27.04.2026
(51) Int. Cl.: G05D 16/06, F16K 31/126, F16K 31/165, F16K 31/00

(54) **PRESSURE REDUCING VALVE AND GAS APPLIANCE**

(30) Priority: 20.05.2025 CN 202510655152
(71) Applicant: Chant Heat Energy Science Technology (Zhongshan) Co., Ltd., Zhongshan, Guangdong 528415 (CN)
(72) Inventor: Yao, Biaocheng, Zhongshan City, Guangdong, 528415 (CN); Deng, Xianmin, Zhongshan City, Guangdong, 528415 (CN); Pan, Junge, Zhongshan City, Guangdong, 528415 (CN); Mai, Guangzhi, Zhongshan City, Guangdong, 528415 (CN)
(74) Representative: Petraz, Gilberto Luigi

(57) **Abstract**

Disclosed are a pressure reducing valve and a gas appliance. The pressure reducing valve includes: a valve body, including a pressure regulating part and an air inlet part, the pressure regulating part being configured to connect to a cooking apparatus end, and the air inlet part and the pressure regulating part being integrated as a single unit; a pressure regulating structure, including a film, a first elastic member, a core shaft, a connecting rod, and a sliding rod, the film, the first elastic member, and the core shaft being disposed in the pressure regulating part, a first end of the connecting rod being pivotably connected to the core shaft, a middle portion of the connecting rod being pivotably connected to the valve body, a second end of the connecting rod being pivotably connected to the sliding rod, and the sliding rod being slidably disposed in the air inlet part; a connector, connected to an end of the air inlet part away from the pressure regulating part, for connecting to a gas cylinder. The pressure reducing valve in the present application leads to not only cost reduction but also manufacturing efficiency improvement by integrating the pressure regulating part and the air inlet part as a single piece.

## Description

### TECHNICAL FIELD

The present application relates to the technical field of pressure reducing valves, and in particular, to a pressure reducing valve and a gas appliance.

### BACKGROUND

The pressure reducing valve is a valve that regulates an inlet pressure to a desired outlet pressure and, by relying on the energy of the medium itself, causes the outlet pressure to automatically remain stable.

In current technology, the valve body includes two portions, a pressure regulating part connected to the gas appliance and a connecting portion connected to the gas cylinder, and the connecting portion is usually prepared using copper material, leading to a higher cost of the pressure reducing valve.

### SUMMARY

To solve at least one problem existing in the prior art described above, a pressure reducing valve is provided according to an aspect of the present application, including:
a valve body, including a pressure regulating part and an air inlet part, the pressure regulating part being configured to connect to a cooking apparatus, and the air inlet part and the pressure regulating part being integrated as a single unit;
a pressure regulating structure, including a film, a first elastic member, a core shaft, a connecting rod and a sliding rod, the film, the first elastic member and the core shaft being disposed in the pressure regulating part, a first end of the connecting rod being pivotably connected to the core shaft, a middle portion of the connecting rod being pivotably connected to the valve body, a second end of the connecting rod being pivotably connected to the sliding rod, and the sliding rod being slidably disposed in the air inlet part; and
a connector, connected to an end of the air inlet part away from the pressure regulating part, and configured to connect to a gas cylinder.

In some implementations, the connecting rod has a first pivot point relative to the sliding rod, a first linear distance formed by a free end of the sliding rod and the first pivot point is configured as L1, the connecting rod has a second pivot point relative to the core shaft, a second linear distance formed by the first pivot point and the second pivot point is configured as L2, and a ratio range of L1: L2 is configured as 0.5 to 2.5.

In some implementations, where the connector includes a first connector and a second connector, the first connector is provided with an external thread, for connecting to the air inlet part, and the second connector is disposed outside the air inlet part, for connecting to the gas cylinder,
an end of the first connector for connecting to the second connector is provided with a glue accommodating groove.

In some implementations, the sliding rod is provided with a flow channel groove extending along a length direction of the sliding rod.

In some implementations, the connector includes:
a housing, the housing being provided with an airflow channel;
an over-flow protection structure, disposed in the airflow channel, the over-flow protection structure being configured to, in response to a flow rate at an air inlet end of the connector being greater than a preset flow rate, at least cause a reduction in a flow capacity of the airflow channel, and being configured to open the airflow channel in response to an air pressure in the valve body reaching balance.

In some implementations, the pressure reducing valve further includes a first buffer member, and the first buffer member is provided at an end of the sliding rod facing the connector.

In some implementations, the pressure reducing valve further includes a second buffer member and/or a third buffer member;

an end of the sliding rod for connecting the connecting rod is provided with a through hole, the second end of the connecting rod is configured to pass through the through hole, an inner wall of the through hole is provided with the second buffer member, and/or an outer wall of the second end of the connecting rod is provided with the third buffer member.

In some implementations, the pressure reducing valve further includes an adjusting member, the adjusting member is disposed in the air inlet part, the adjusting member is disposed between the sliding rod and the connector, the adjusting member and the air inlet part are threaded.

In some implementations, the pressure reducing valve further includes a handwheel structure, the handwheel structure is rotatably mounted outside the air inlet part, and the handwheel structure includes a hand-turning wheel and a threaded handwheel that are detachably engaged, the hand-turning wheel is for driving the threaded handwheel to rotate under the action of an external force, and the threaded handwheel is configured to connect to the gas cylinder.

A gas appliance is provided according to another aspect of the present application, including the pressure reducing valve described above.

In summary, the pressure reducing valve and the gas appliance provided by the present application provide the following technical effects:

By regulating the inlet and outlet air pressure through a pressure regulating structure, and connecting to a gas cylinder through a connector to realize gas input into a valve body, and adopting an integrated configuration for the air inlet part and the pressure regulating part of the valve body:
(1) The subsequent step of assembling the air inlet part and the pressure regulating part via threads is avoided, leading to improved molding efficiency of the entire pressure reducing valve;
(2) due to the integrated molding method, control over the molding precision of the entire valve body is enabled, leading to the overall dimensions of the pressure reducing valve being controllable within the range of a standard length;
(3) due to the air inlet part and the pressure regulating part being prepared from the same material, the use of copper material is reduced, leading to lower molding cost of the entire pressure reducing valve.

### BRIEF DESCRIPTION OF THE DRAWINGS

FIG. 1 is a structural schematic diagram of a pressure reducing valve in the prior art;
FIG. 2 is a structural schematic diagram of another pressure reducing valve in the prior art;
FIG. 3 is a structural schematic diagram of a pressure reducing valve according to Embodiment 1 of the present application;
FIG. 4 is a structural schematic diagram of a pressure reducing valve according to Embodiment 2 of the present application;
FIG. 5 is a structural schematic diagram of a pressure reducing valve according to Embodiment 3 of the present application;
FIG. 6 is a schematic diagram of an installation method of the pressure reducing valve in FIG. 3;
FIG. 7 is a structural schematic diagram of a connecting rod and a sliding rod in FIG. 3;
FIG. 8 is a cross-sectional schematic diagram of the connecting rod and the sliding rod in FIG. 7;
FIG. 9 is a structural schematic diagram of the sliding rod in FIG. 7;
FIG. 10 is a structural schematic diagram of an embodiment of a connector in FIG. 3;
FIG. 11 is a structural schematic diagram of a blocking member in FIG. 10;
FIG. 12 is a structural schematic diagram of another embodiment of the connector in FIG. 3;
FIG. 13 is a structural schematic diagram of the blocking member, a first foaming assembly, and a second foaming assembly in FIG. 12;
FIG. 14 is a structural schematic diagram of a pressure reducing valve according to Embodiment 4 of the present application.

Reference Numerals: 100, pressure reducing valve; 10, valve body; 11, pressure regulating part; 12, air inlet part; 20, pressure regulating structure; 21, film; 22, first elastic member; 23, core shaft; 24, connecting rod; 241, first pivot point; 242, second pivot point; 25, sliding rod; 251, flow channel groove; 252, through hole; 30, connector; 31, first connector; 311, glue accommodating groove; 32, second connector; 33, housing; 331, airflow channel; 3311, first segment; 3312, second segment; 332, air inlet end; 333, air outlet end; 334, auxiliary flow channel; 34, over-flow protection structure; 341, second elastic member; 342, blocking member; 3421, installation segment; 3422, blocking segment; 3423, pressure relief channel; 3424, accommodating cavity; 3425, first covering part; 3426, second covering part; 343, first sealing ring; 35, adjusting structure; 36, first foaming assembly; 361, first foaming agent; 362, first coating film; 37, second foaming assembly; 371, second foaming agent; 372, second coating film; 38, second sealing ring; 40, first buffer member; 50, second buffer member; 60, third buffer member; 70, adjusting member; 80, handwheel structure; 81, hand-turning wheel; 82, threaded handwheel; 400, wrench.

### DETAILED DESCRIPTION

For better understanding and implementation, the technical solutions in the embodiments of the present application will be described clearly and completely below in combination with the accompanying drawings in the embodiments of the present application.

In the description of the present application, it should be noted that the terms "upper", "lower", "front", "rear", "left", "right", "vertical", "horizontal", "top", "bottom", "inner", "outer" and the like indicate orientations or positional relationships based on the orientations or positional relationships shown in the accompanying drawings, and are only for facilitating the description of the present application and simplifying the description, rather than indicating or implying that the referred apparatus or element must have a specific orientation, be constructed and operated in a specific orientation, and therefore should not be construed as limiting the present application.

Unless otherwise defined, all technical and scientific terms used herein have the same meanings as commonly understood by those skilled in the technical field of the present application. The terms used in the specification of the present application herein are only for the purpose of describing specific embodiments and are not intended to limit the present application.

The present application will be described in further detail below in combination with the accompanying drawings.

### Embodiment 1

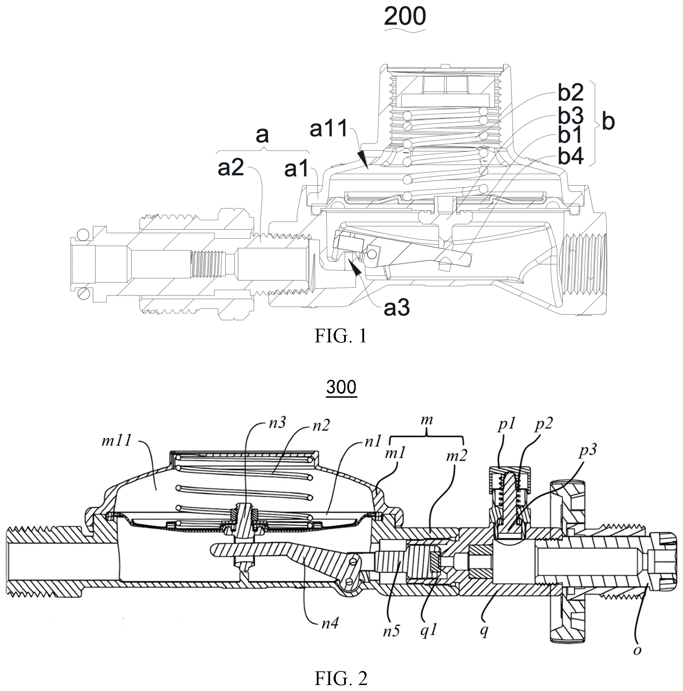

Referring to FIG. 1, which is a schematic structural diagram of a pressure reducing valve in the prior art, including a valve body *a* and a pressure regulating structure disposed in the valve body *a*, the pressure regulating structure including a flexible membrane *b1,* a spring *b2,* a core shaft *b3,* and a connecting rod *b4,* the valve body *a* including a pressure regulating part *a1* and an air inlet part *a2,* the pressure regulating part *a1* having a valve cavity *a11,* and the pressure regulating part *a1* being provided with a communication port *a3* communicating with the air inlet part *a2,* the flexible membrane *b1* being installed in the valve cavity *a11,* dividing the valve cavity *a11* into an upper cavity and a lower cavity, a spring *b2* being installed between the flexible membrane *b1* and an inner wall of the upper cavity, the core shaft b3 being connected to the flexible membrane *b1,* the connecting rod *b4* being disposed in the lower cavity, and pivotably connected to the valve body *a*, for opening or closing the communication port *a3* in response to vibration of the flexible membrane *b1.*

Specifically, during use of the pressure reducing valve, gas with higher air pressure enters the lower cavity from the air inlet part *a2,* the airflow pushes the flexible membrane *b1* to move upward and compress the adjusting spring *b2,* and simultaneously drives the connecting rod *b4* to rotate, in response to the gradual increase of the air pressure in the lower cavity as the airflow enters the lower cavity, the spring *b2* is compressed, the connecting rod b4 closes the communication port *a3,* in response to the continuous discharge of gas from the air outlet and the decrease of the air pressure in the lower cavity, under the action of the elastic force of the spring b2, and in response to the elastic force being greater than the thrust generated by the air pressure in the lower cavity, the flexible membrane *b1* is pushed to move downward, and drives the connecting rod *b4* to open the communication port *a3,* thus reciprocating, so that the air pressure of the gas flowing out from the air outlet is stabilized within a set range, thereby achieving the effect of stabilizing and reducing pressure.

However, in the setting of the valve body *a* in the prior art, the pressure regulating part *a1* and the air inlet part *a2* adopt a separate forming manner, and the two are connected by means of threads, having the following defects:
(1) The installation of the valve body *a* is complex, and the forming efficiency is low;
(2) To ensure installation stability, the air inlet part *a2* reserves a threaded segment during forming, after installation is completed, the threaded segment is exposed, affecting aesthetics, and simultaneously, due to the varying lengths of the reserved threaded segments after connection, the dimensional consistency of the entire valve body *a* is affected;
(3) To ensure sealing, the air inlet part *a2* and the air inlet part *a2* are tightened with glue after being connected by threads, the glue overflows onto the handwheel, affecting subsequent rotation of the handwheel;
(4) The air inlet part *a2* is usually prepared from copper material, making the forming cost of the valve body *a* relatively high.

To solve the above technical problems, Embodiment 1 of the present application provides a pressure reducing valve 100, to reduce the forming cost of the entire valve body 10, and to ensure installation accuracy and installation efficiency between the pressure regulating part 11 and the air inlet part 12 of the valve body 10.

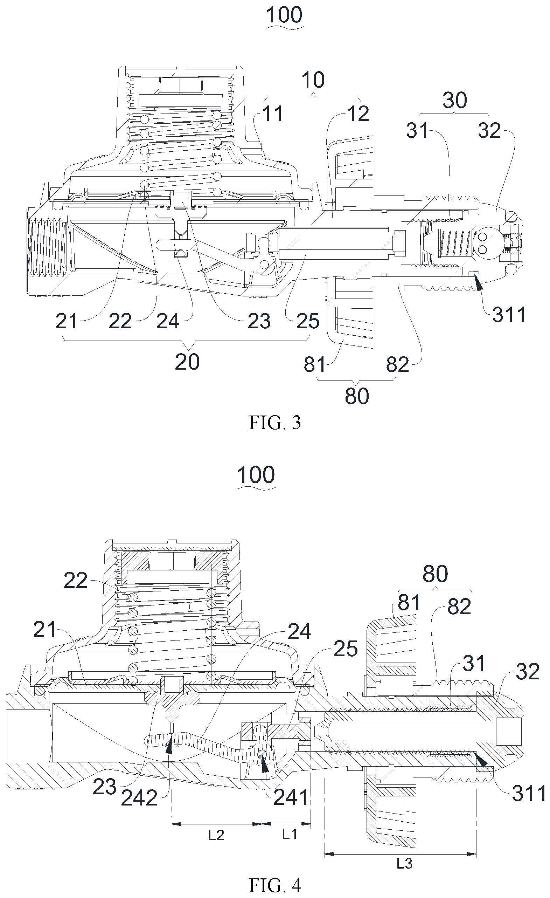

The pressure regulating part 11 and the air inlet part 12 specifically, referring to FIGS. 3 to 5, which is the pressure reducing valve 100 provided by Embodiment 1 of the present application, including a valve body 10, a pressure regulating structure 20, and a connector 30.

The valve body 10 includes a pressure regulating part 11 and an air inlet part 12, the pressure regulating part 11 is configured to connect to a cooking apparatus, the air inlet part 12 and the pressure regulating part 11 are integrated as a single unit; the pressure regulating structure 20 is disposed in the pressure regulating part 11, including a film 21, a first elastic member 22, a core shaft 23, a connecting rod 24, and a sliding rod 25, the film 21, the first elastic member 22, and the core shaft 23 are disposed in the pressure regulating part 11, a first end of the connecting rod 24 is pivotably connected to the core shaft 23, a middle portion of the connecting rod 24 is pivotably connected to the valve body 10, a second end of the connecting rod 24 is pivotably connected to the sliding rod 25, the sliding rod 25 is slidably disposed in the air inlet part 12; the connector 30 is connected to an end of the air inlet part 12 away from the pressure regulating part 11, and is configured to connect to a gas cylinder.

The above pressure reducing valve 100 regulates the pressure of incoming and outgoing gas through the pressure regulating structure 20, and connects to the gas cylinder through the connector 30, to realize the input of gas in the valve body 10, adopting the manner of integrating the air inlet part 12 and the pressure regulating part 11 of the valve body 10 as a single unit:
(1) avoiding the step of subsequently assembling the air inlet part 12 and the pressure regulating part 11 through threads, improving the forming efficiency of the entire pressure reducing valve 100;
(2) due to adopting the integrated forming manner, being able to control the forming accuracy of the entire valve body 10, so that the size of the entire pressure reducing valve 100 may be controlled within a range of standard length;
(3) due to the air inlet part 12 and the pressure regulating part 11 being prepared from the same material, reducing the use of copper material, lowering the forming cost of the entire pressure reducing valve 100.

### Embodiment 2

In some implementations, referring to FIGS. 3 to 5, due to the connector 30 being connected to the air inlet part 12, to ensure tightness of the connection, glue is applied between the two, to avoid overflow of the glue, the connector 30 includes a first connector 31 and a second connector 32, the first connector 31 is provided with an external thread, configured to connect to the air inlet part 12, the second connector 32 is disposed outside the air inlet part 12, configured to connect to the gas cylinder, where, an end of the first connector 31 configured to connect to the second connector 32 is provided with a glue accommodating groove 311, thus, through the provision of the glue accommodating groove 311, in response to the first connector 31 and the air inlet part 12 being sealed by glue, the glue may overflow into the glue accommodating groove 311, avoiding overflow outside the connector 30, and avoiding impact on the handwheel.

It may be understood that, when providing the glue accommodating groove 311 on the first connector 31, the glue accommodating groove 311 may be provided along the circumferential direction of the first connector 31 in one continuous loop to ensure glue accommodating capacity; or in another embodiment, a plurality of glue accommodating grooves 311 may be provided separately along the circumferential direction of the first connector 31, which not only achieves the glue accommodating effect but also ensures the structural strength of the first connector 31.

### Embodiment 3

Referring to FIG. 2, which is a schematic structural diagram of another pressure reducing valve in the prior art, including a valve body *m*, a pressure regulating structure disposed inside the valve body *m*, an adapter structure q disposed on one side of the valve body *m*, and a connector o disposed at one end of the adapter structure q, the connector o being configured to connect to a gas cylinder, the pressure regulating structure including a flexible membrane *n1,* a first spring *n2,* a core shaft *n3,* a connecting rod *n4,* and a sliding rod *n5,* the valve body m including a pressure regulating part *m1* and an air inlet part *m2,* the air inlet part *m2* being provided with connection threads, the connection threads being connected to a connection segment *q1* of the adapter structure q, the pressure regulating part *m1* having a valve chamber *m11,* the flexible membrane *n1* being installed inside the valve chamber *m11,* separating the valve chamber *m11* into an upper chamber and a lower chamber, the first spring n2 being installed between the flexible membrane *n1* and an inner wall of the upper chamber, the core shaft *n3* being connected to the flexible membrane *n1,* the connecting rod *n4* being disposed in the lower chamber and pivotably connected to the valve body m to drive the sliding rod *n5* to slide inside the air inlet part *m2,* the sliding rod *n5* moving closer to or away from the connector o in response to the flexible membrane *n1* vibrating up and down, driving the connecting rod *n4* to rotate via the core shaft *n3* and driving the sliding rod *n5* to slide.

Specifically, during use of the pressure reducing valve, gas with higher pressure enters the lower chamber from the air inlet part *m2,* the airflow pushes the flexible membrane *n1* to move upward and compresses the first spring *n2,* simultaneously driving the sliding rod *n5* to move closer to the adapter structure *q,* thereby reducing the gas inlet flow rate; the sliding rod *n5* moving to close an outlet of the adapter structure *q* in response to excessive gas pressure in the lower chamber, stopping gas from entering the lower chamber. The sliding rod *n5* moving away from the adapter structure *q* in response to gas pressure in the lower chamber decreasing as gas flows out from the pressure regulating part *m1* and the elastic force of the first spring *n2* being greater than a thrust generated by the gas pressure in the lower chamber, the flexible membrane *n1* being pushed downward, gradually opening the adapter structure q, repeating this cycle, maintaining the gas pressure flowing out from the pressure regulating part within a set range, achieving a pressure stabilizing and reducing effect.

However, in this pressure reducing valve of the prior art, the sliding rod *n5* is slidably disposed in a portion where the air inlet part *m2* and the connection segment *q1* are connected, the adapter structure q further being provided with a switch structure (the switch structure including a button *p1,* a second spring *p2*, and a blocking ball *p3*) to close an air inlet channel of the connector o via the pressed blocking ball *p3* in response to excessive inlet pressure, the switch structure only being opened manually after being closed, and the entire adapter structure q having a certain extension length, the length of the connection segment *q1* may not be set too long, avoiding the risk of breakage under external force when the extension length of the entire adapter structure q is long, thus, the length setting of the connection segment *q1* being limited, resulting in the length of the sliding rod *n5* also being limited, understandably, a sliding rod *n5* with a shorter length having smaller installation constraints and lower installation precision due to its shorter length during installation, the sliding rod *n5* having greater freedom of movement and being prone to generating a buzzing sound in response to airflow passing through the adapter structure q.

That is, the pressure reducing valve corresponding to FIG. 2 has the following technical problems:
(1) The switch structure may only be opened manually after being manually closed during over-pressure use, making it inconvenient to use;
(2) The length of the sliding rod n5 is limited, making it prone to generating a buzzing sound during use;
(3) The sliding rod n5 may not be structurally improved to optimize the inlet flow rate because its length is too short after being connected to the connecting rod n4.

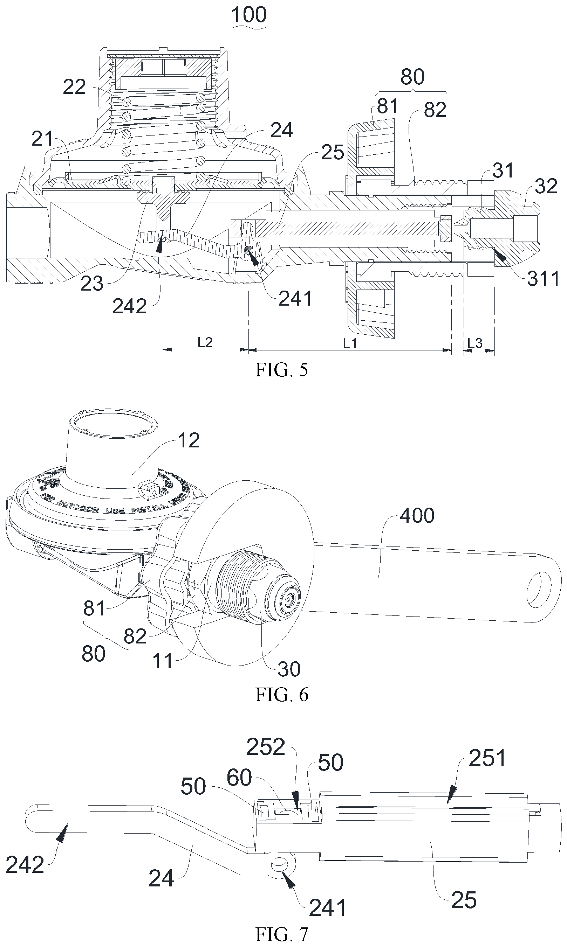

Based on Embodiment 1, to solve the above technical problems, referring to FIGS. 4 and 5, the connecting rod 24 has a first pivot point 241 relative to the sliding rod 25, a first linear distance formed between a free end of the sliding rod 25 and the first pivot point 241 is configured as L1, the connecting rod 24 has a second pivot point 242 relative to the core shaft 23, a second linear distance formed between the first pivot point 241 and the second pivot point 242 is configured as L2, and a ratio range of L1 to L2 is configured as 0.5 to 2.5.

The valve cavity pressure instantly increasing to be the same as the high pressure of the gas cylinder (for example, approximately 1 MPa) if the ratio of L1 to L2 is less than 0.5, due to the sliding rod 25 being shorter at this time, for example as shown in FIG. 4, the sliding rod 25 having lower installation precision and higher freedom of movement, the sliding rod 25 easily disengaging under extreme external conditions such as strong vibration or impact, causing the pressure regulating function to fail, the valve body 10 becoming a direct-pass state (that is, a state without pressure reduction), while the gas appliance connected to the rear end of the valve is at low pressure (approximately 4 kPa), the gas appliance pressure instantly increasing by 250 times, various connection points at the rear end of the valve and the gas appliance being unable to withstand such high pressure, leading to a risk of a large amount of gas leakage or even interface disintegration, triggering a gas explosion safety accident;

In some implementations, the length L3 of the first connector 31 connecting the connector 30 and the air inlet part 12 needs to be very long if the ratio of L1 to L2 is less than 0.5, that is, screwing into the air inlet part 12 very deeply to get as close as possible to the sliding rod 25, at this time, processing requirements for the matching threads of the first connector 31 and the air inlet part 12 being extremely high, the first connector 31 being unable to be screwed in with the slightest deviation, or easily becoming skewed even if screwed in, leading to poor sealing issues when the sliding rod 25 seals an outlet of the first connector 31, severely affecting the normal function of the valve body 10.

Referring to FIG. 5, when the ratio of L1 to L2 is configured to be greater than 2.5, the extension length of the sliding rod 25 is extremely long, which imposes extremely high requirements on the machining of the matching inner hole of the air inlet part 12; a slight deviation may cause the sliding rod 25 to be unable to be installed, or even if installed, it may easily become skewed, leading to friction with the inner cavity of the air inlet part 12 during use and affecting the normal function of the pressure reducing valve 100. In addition, within the predetermined length range required for the length of the air inlet part 12, because the sliding rod 25 is very long, it occupies the threads of the air inlet part 12; at this time, the connection length L3 of the first connector 31 of the connector 30 will be very small, affecting the connection stability of the connection area; if, in order to allow the first connector 31 to have sufficient screwing-in length, the air inlet part 12 needs to be lengthened at this time, this not only requires increasing additional material costs that were originally unnecessary, but also, an excessively long pressure regulating part 11 may cause the overall length center of the pressure reducing valve 100 to be unbalanced, with insufficient overall strength, making it very easy to break under unforeseen external forces, leading to a large amount of gas leakage and causing gas explosion safety accidents.

Therefore, the ratio of L1 to L2 should be controlled within the range of 0.5 to 2.5, not only ensuring installation accuracy but also keeping the cost of the entire valve within a preset range.

In summary, providing the pressure regulating part 11 and the air inlet part 12 of the valve body 10 in an integrated as a single piece manner reduces the length of the air inlet part 12 in the prior art of FIG. 1 and FIG. 2, achieving a cost reduction effect; meanwhile, because the pressure regulating part 11 and the air inlet part 12 are provided in an integrated as a single piece manner, the length of the sliding rod 25 and the length of the first connector 31 may be set as needed, ensuring the stability of the sliding rod 25 and the air intake volume.

### Embodiment 4

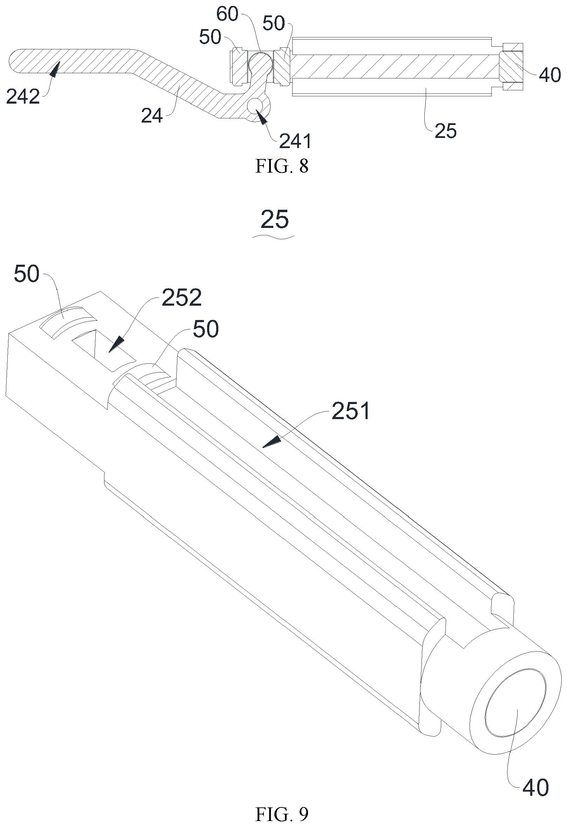

Based on the second embodiment, referring to FIGS. 7 to 9, in order to solve the intake flow problem described in the second embodiment, the sliding rod 25 in the present embodiment is provided with a flow channel groove 251 extending along the length direction of the sliding rod 25; thus, by providing the flow channel groove 251, gas not only flows into the pressure regulating part 11 from between the sliding rod 25 and the inner wall of the air inlet part 12 but also flows into the pressure regulating part 11 through the flow channel groove 251, thereby increasing the volume of gas inflow, increasing the air intake volume, and improving the performance of the entire pressure reducing valve 100. Compared to the air intake method of the valve body in the prior art of FIG. 1, if the air intake volume needs to be increased, for example, adjusted to 1.5 times the original, the communication port *a3* needs to be enlarged to 1.5 times the original; to ensure sealing, the sealing portion of the connecting rod *b4* must then be enlarged in area; correspondingly, the volume of the pressure regulating part *a1* must be increased, leading to an increase in the overall size of the valve. Relative to the method of the sliding rod *n5* in the prior art of FIG. 2, because the sliding rod *n5* in FIG. 2 is relatively short and a penetration hole matching the connecting rod 24 needs to be provided on the sliding rod 25, to ensure the structural strength of the sliding rod 25, the adjustable space for the size of the sliding rod *n5* in FIG. 2 is very small, and it is difficult to provide a flow channel groove on the sliding rod 25; therefore, a high-flow pressure reducing valve 100 may not be achieved.

In this way, in the present embodiment, by providing the flow channel groove 251 on the sliding rod 25, not only may a high-flow pressure reducing valve 100 be achieved, but because the flow rate of the valve is ensured, miniaturization of the entire pressure reducing valve 100 may also be achieved; meanwhile, high flow may be achieved, improving the practical performance of the pressure reducing valve 100.

### Embodiment 5

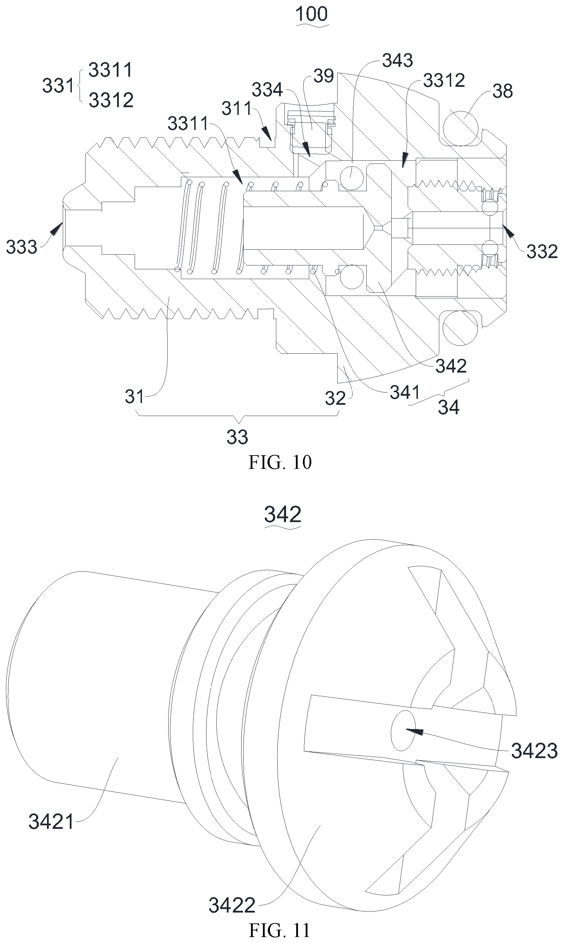

Referring to FIGS. 10 to 13, based on the first to fourth embodiments, the connector 30 in the present embodiment includes a housing 33, the housing 33 is provided with an airflow channel 331, having an air inlet end 332 and an air outlet end 333; an over-flow protection structure 34 is disposed in the airflow channel 331, the over-flow protection structure 34 being capable of, in response to the pressure at the air inlet end 332 of the connector 30 being greater than a preset pressure, at least reducing the flow capacity of the airflow channel 331, and being capable of opening the airflow channel 331 in response to the air pressure inside the valve body 10 reaching equilibrium; that is, the connector 30 in the present embodiment not only realizes a connection function but may also achieve a protection function in case of over-flow; further, it may also automatically restore the opening of the gas flow channel in response to the air pressure inside the valve body 10 reaching equilibrium, avoiding a manual method and facilitating user use.

Specifically, the over-flow protection structure 34 includes a second elastic member 341 and a blocking member 342, in response to the intake flow rate at the air inlet end 332 being greater than a preset flow rate, driving the second elastic member 341 to undergo elastic deformation, to at least reduce the flow capacity of the airflow channel 331; in some implementations, this refers to the flow capacity of the airflow channel 331 being reduced to a percentage of the original; in another implementation, it may refer to the flow capacity of the airflow channel 331 being reduced to zero.

In some implementations, referring to FIG. 10, the airflow channel 331 includes a first segment 3311 and a second segment 3312, the inner diameter of the first segment 3311 being smaller than the inner diameter of the second segment 3312; the second elastic member 341 is disposed in the first segment 3311, the blocking member 342 is movably disposed in the second segment 3312, configured to move toward the first segment 3311 in response to the intake flow rate at the air inlet end 332 being greater than a preset flow rate, under the push of air pressure, to block the opening of the first segment 3311 facing the second segment 3312, thereby achieving blocking of the airflow channel 331.

Referring to FIG. 11, in some implementations, the blocking member 342 may be provided including a mounting segment 3421 and a blocking segment 3422 with different outer diameters, the mounting segment 3421 being capable of moving in the first segment 3311 and the second segment 3312; in response to a high-pressure condition, the airflow pushes the blocking segment 3422 to abut against the end face of the first segment 3311 facing the second segment 3312, thereby achieving blocking of the airflow channel 331 while compressing the second elastic member 341.

It may be understood that a first sealing ring 343 may be sleeved on the mounting segment 3421, achieving a stable sealing effect through the abutment of the first sealing ring 343 and the end face of the first segment 3311 facing the second segment 3312.

In some implementations, in response to a need to achieve internal air pressure balance after blocking, the plug member 342 is provided with a pressure relief channel 3423 arranged along the extending direction of the airflow channel 331, in response to the first sealing ring 343 blocking the gas flow channel, the pressure relief channel 3423 is capable of allowing gas flowing in from the air inlet end 332 to flow into the first segment 3311, at this time, the air pressure in the first segment 3311 increases as the gas may only flow out towards the air outlet end 333 through the pressure relief channel 3423, and the pressure relief channel 3423 has a very small size, at this time, the fire power of the gas stove becomes very small, and the user will turn off the gas stove, however, the gas cylinder is in an open state, the pressure relief channel 3423 is capable of allowing gas flowing in from the air inlet end 332 to flow into the first segment 3311, the air pressure inside the housing 33 gradually increases, in response to the air pressure inside the connector 30 reaching a balance, the second elastic member 341 has an elastic force, at this time, applying an elastic force to the plug member 342, pushing the first sealing ring 343 away from the first segment 3311, at this time, the connector 30 may supply gas normally, thereby achieving an automatic reset effect and facilitating user operation.

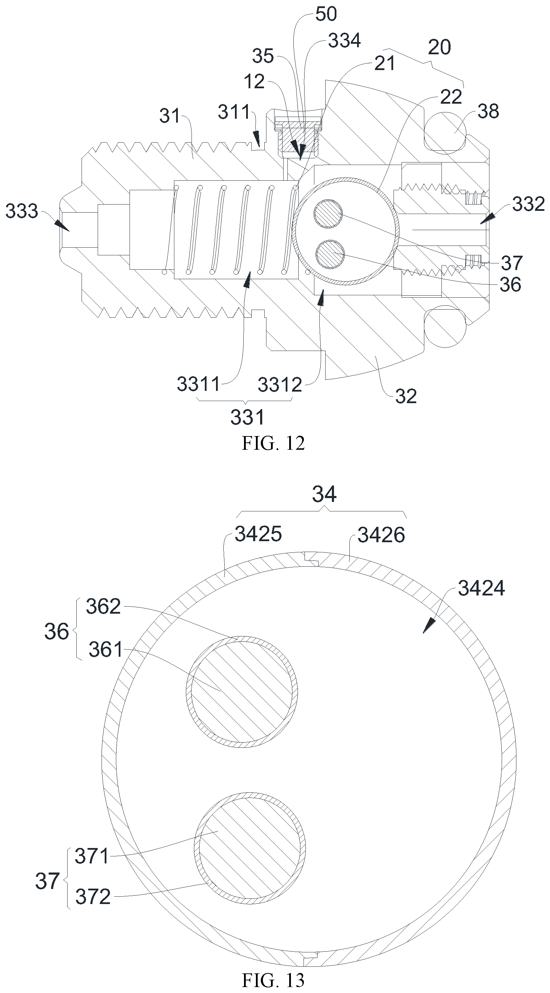

In another embodiment, referring to FIGS. 12 and 13, the plug member 342 may be configured as a spherical plug member 342, the spherical plug member 342 and the side wall of the airflow channel 331 are in curved contact, having a smaller contact area, the frictional resistance between the spherical plug member 342 and the side wall of the airflow channel 331 is smaller in response to the gas pressure pushing the spherical plug member 342 to move, facilitating the plug member 342 pushing the elastic member to move.

In response to the plug member 342 being configured as the spherical plug member 342, in order to achieve a self-recovery effect, the housing 33 is provided with an auxiliary flow channel 334, the connector 30 further includes an adjustment structure 35, the auxiliary flow channel 334 communicates between the first segment 3311 and the second segment 3312, the adjustment structure 35 is adjustably disposed on the auxiliary flow channel 334, configured to adjust the flow capacity of the gas flowing from the first segment 3311 to the second segment 3312 after the plug member 342 blocks the opening of the first segment 3311, and the flow capacity of the auxiliary flow channel 334 is much smaller than the flow capacity of the airflow channel 331, thereby after the plug member 342 blocks the first segment 3311, gas flowing in from the air inlet end 332 enters the second segment 3312, then flows into the first segment 3311 through the auxiliary flow channel 334, and flows out from the air outlet end 333, at this time, the fire power at the cooking apparatus end is very small, and the user will turn off the gas stove, however, the gas cylinder is in an open state, gas may still continuously flow into the connector 30, in response to the air pressure inside the connector 30 reaching a balance, driven by the elastic force of the second elastic member 341, driving the plug member 342 to return to its original position, to open the opening of the first segment 3311.

The adjustment structure 35 is configured to adjust the flow capacity of the auxiliary flow channel 334, to adjust the duration for the plug member 342 to return to its original position.

In some implementations, referring to FIG. 13, in one embodiment, in response to using the spherical plug member 342, the plug member 342 is provided with a receiving cavity 3424, and the plug member 342 is a plastic member, capable of melting in response to an ambient temperature being greater than a preset temperature; the connector 30 further includes a first foaming assembly 36 and a second foaming assembly 37, the first foaming assembly 36 and the second foaming assembly 37 are disposed in the receiving cavity 3424, the melting point of the first foaming assembly 36 and the melting point of the second foaming assembly 37 are both smaller than the melting point of the plug member 342, and may be configured as the preset temperature, for example, 80 degrees, in response to the ambient temperature being greater than the preset temperature, the first foaming assembly 36 and the second foaming assembly 37 gradually melt, the first foaming assembly 36 and the second foaming assembly 37 are configured to foam after mixing to block the airflow channel 331, thereby by additionally providing the first foaming assembly 36 and the second foaming assembly 37 inside the plug member 342, as the ambient temperature rises, the first foaming assembly 36 and the second foaming assembly 37 first melt, subsequently the externally provided plug member 342 gradually softens, driven by the air pressure at the air inlet end 332, the plug member 342 tumbles inside the airflow channel 331, the first foaming assembly 36 and the second foaming assembly 37 accelerate mixing, and foam and expand, as the ambient temperature continues to rise, reaching the melting point of the plug member 342, the plug member 342 melts and fills the airflow channel 331, the first foaming assembly 36 and the second foaming assembly 37 foam, expand, and continue to fill the airflow channel 331, blocking the remaining small gaps between the plug member 342 and the airflow channel 331, achieving dual blocking of the airflow channel 331, ensuring the sealing of the block, at this time, no gas flows out from the air outlet, achieving over-temperature protection.

That is, the over-flow protection structure 34 of the present embodiment further has an over-temperature protection effect.

The first foaming assembly 36 of the present embodiment includes a first foaming agent 361 and a first coating film 362 coating the first foaming agent 361; the second foaming assembly 37 includes a second foaming agent 371 and a second coating film 372 coating the second foaming agent 371; the melting point of the first coating film 362 and the melting point of the second coating film 372 are both smaller than the melting point of the plug member 342, where, the melting points of the first coating film 362 and the second coating film 372 may be the same or different, in response to the melting points of the two being configured to be the same, the preset temperature at this time may be configured as 80°C; in response to the melting points of the two being different, the melting point of one may be configured as the preset temperature, and the melting point of the other may be configured as slightly greater than the preset temperature, in this way, as the ambient temperature rises, when reaching the preset temperature, the first coating film 362 and the second coating film 372 first melt, allowing the internal first foaming agent 361 and second foaming agent 371 to mix and foam, further as the ambient temperature rises, the plug member 342 melts, at this time, the foamed material blocks inside the airflow channel.

In some implementations, the materials of the first coating film 362 and the second coating film 372 are polyurethane, the material of the first foaming agent 361 includes: polyether polyol, polymer polyol, polyether carbonate, catalyst, flame retardant; the material of the second foaming agent 371 includes isocyanate, the blocking member 342 in the present embodiment may be set as polypropylene, the blocking member 342 gradually softens in response to the external environment reaching 80°C, the blocking member 342 gradually melts and becomes fluid in response to the ambient temperature further increasing, for example reaching approximately 115°C to 150°C, and filling within the airflow channel 331, thereby achieving a blocking effect; simultaneously, the first foaming agent 361 and the second foaming agent 371 foam after mixing in response to the melting of the blocking member 342, the volume expanding and increasing to fill within the airflow channel 331, achieving a more airtight blocking effect.

In some implementations, the weight ratio range of the first foaming agent 361 to the second foaming agent 371 in the present embodiment is 1:1 to 1:2, thus, through this mass ratio setting, the two foaming agents may achieve a rapid mixing and foaming effect, for example, rapid foaming may be achieved within 3 to 5 minutes, rapidly achieving blocking of the gas flow channel, allowing the user to have escape time.

The blocking member 342 in the present embodiment may be set as polypropylene, the blocking member 342 gradually softens in response to the external environment reaching 80°C, but the melting point of the blocking member 342 has not yet been reached.

In the present embodiment, when providing the first foaming assembly 36 and the second foaming assembly 37 within the blocking member 342, the blocking member 342 includes an independently formed first covering part 3425 and a second covering part 3426, the first covering part 3425 and the second covering part 3426 enclose to form an accommodating cavity 3424, the independently formed first covering part 3425 and second covering part 3426 are for facilitating placing the first foaming assembly 36 and the second foaming assembly 37 inside them, subsequently connecting the first covering part 3425 and the second covering part 3426 into a single unit, for example, assembling through ultrasonic welding or interference press-fitting.

It is to be understood that this overtemperature protection method is irreversible and for one-time use.

Consequently, the aforementioned pressure reducing valve 100 may dispose the overpressure closing realization structure within the connector 30, may be in a concealed manner, reducing the occupying volume of the entire pressure reducing valve 100, simultaneously may automatically return to a state of opening the fluid flow channel in response to the internal air pressure being in an equilibrium state, not requiring manual adjustment, facilitating use by the user; simultaneously, the blocking member 342 is also set as a plastic member, capable of softening or even melting, to block the airflow channel, achieving a protection effect at high temperatures, further by additionally providing the first foaming agent 361 and the second foaming agent 371 within the blocking member 342, in a high temperature environment, not only may block the airflow channel 331 through melting of the blocking member 342, the first foaming agent 361 and the second foaming agent 371 may also foam and expand after mixing to fill within the airflow channel 331, achieving secondary blocking of the airflow channel 331, ensuring the tightness of the blocking of the airflow channel 331.

### Embodiment 6

Referring to FIGS. 7 to 9, based on Embodiments 1 to 5, a first buffer member 40 is provided at one end of the sliding rod 25 facing the connector 30 to avoid noise in response to the sliding rod 25 blocking at the end of the connector 30, for example, setting a rubber pad, achieving a noise reduction effect through the flexible rubber pad and the connector 30.

The first buffer member 40 may be embedded within the sliding rod 25 or may be coated on the outer side of the end of the sliding rod 25 when provided, which is not limited herein.

### Embodiment 7

In some implementations, referring to FIGS. 7 to 9, based on Embodiments 1 to 6, the pressure reducing valve 100 further includes a second buffer member 50 and/or a third buffer member 60 to avoid noise caused by collision at the connection between the connecting rod 24 and the sliding rod 25; a through hole 252 is provided at one end of the sliding rod 25 for connecting the connecting rod 24, a second end of the connecting rod 24 passes through the through hole 252, a second buffer member 50 is provided on an inner wall of the through hole 252, and/or a third buffer member 60 is provided on an outer wall of the second end of the connecting rod 24, because the rotation of the connecting rod 24 needs to drive the sliding rod 25 to perform linear motion, the second end of the connecting rod 24 and the inner wall of the through hole 252 have a gap, the second end of the connecting rod 24 has a certain range of movement within the through hole 252, therefore, to avoid noise caused by the second end of the connecting rod 24 and the end of the sliding rod 25 colliding, the second buffer member 50 is provided on the inner wall of the through hole 252, and/or the third buffer member 60 is provided on the outer wall of the second end of the connecting rod 24, achieving a noise reduction effect through collision between materials with flexible properties or between materials with flexible properties and hard materials.

Specifically, the second buffer member 50 may be provided on the inner wall of the through hole 252, or the third buffer member 60 may be provided on the outer wall of the second end of the connecting rod 24, or buffer members may be provided on both the inner wall of the through hole 252 and the outer wall of the second end of the connecting rod 24, for example, both the second buffer member 50 and the third buffer member 60 may be set as rubber, thereby achieving a noise reduction effect.

### Embodiment 8

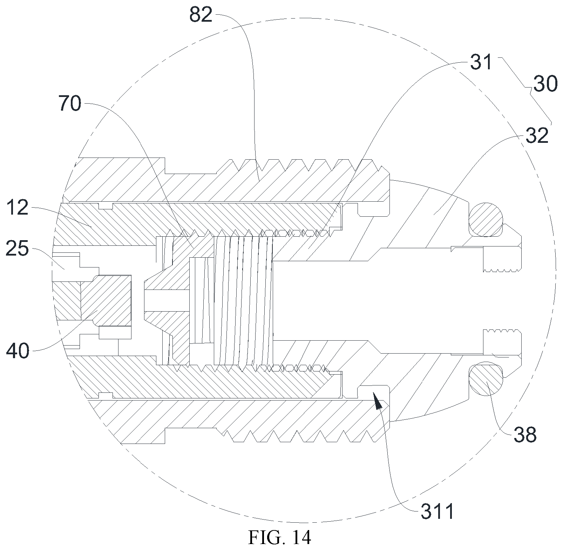

Referring to FIG. 14, illustrating a pressure reducing valve 100 according to Embodiment 8 of the present application, based on Embodiments 1 to 7, the pressure reducing valve 100 of the present embodiment further includes an adjusting member 70, the adjusting member 70 is disposed within the air inlet part 12, arranged opposite to the sliding rod 25, the adjusting member 70 is disposed between the sliding rod 25 and the connector 30, and is threadedly connected to the air inlet part 12, and is provided with a passage communicating with the airflow channel of the housing 33, thus, when the user needs to adjust the inlet airflow rate, by inserting an external tool into the adjusting member 70, turning the adjusting member 70 to move away from or closer to the sliding rod 25 to adjust the distance to the sliding rod 25, thereby achieving regulation of the inlet airflow rate.

It is to be understood that a diameter of the end of the adjusting member 70 facing the sliding rod 25 is relatively small, facilitating closing the opening of the adjusting member 70 by the sliding rod 25.

The pressure reducing valve 100, by providing the adjusting member 70 in the air inlet part 12, may adjust the distance between the adjusting member 70 and the sliding rod 25, thereby achieving the effect of adjusting the air inflow rate, and the user may perform adjustment according to their own needs, meeting the usage requirements of customers.

### Embodiment 9

Referring to FIGS. 3 to 6, 10, and 12, on the basis of Embodiments 1 to 8, the pressure reducing valve 100 provided in the embodiment 9 of the present application, to ensure the sealing performance when the pressure reducing valve 100 is installed on a gas cylinder, the pressure reducing valve 100 further includes a handwheel structure 80, the handwheel structure 80 is rotatably mounted outside the air inlet part 12, including a detachably engaged hand-turning wheel 81 and a threaded handwheel 82, the threaded handwheel 82 is configured to be connected to the gas cylinder, thus, by installing the hand-turning wheel 81 and the threaded handwheel 82 in a detachably engaged manner, in response to the connector 30 engaging with the gas cylinder, in one approach, the exposed second connector 32 of the connector 30 is provided with a second sealing ring 38, to achieve a sealed connection with the gas cylinder, the hand-turning wheel 81 is sleeved outside the threaded bolt, the threaded handwheel 82 is rotated to achieve connection with the gas cylinder, and due to the provision of the second sealing ring 38, sealing may be achieved; in another approach, in response to the second connector 32 of the connector 30 not being provided with the second sealing ring 38, since the connector 30 is made of metal, poor sealing may occur when installed on a metal gas cylinder, during installation in this approach, initially, the hand-turning wheel 81 drives the threaded handwheel 82 to be installed on the gas cylinder, then the hand-turning wheel 81 is withdrawn from the threaded handwheel 82, causing the threaded handwheel 82 to expose a hexagonal installation portion, a wrench 400 is engaged with the hexagonal installation portion of the threaded handwheel 82 to tighten the threaded handwheel 82, as shown in FIG. 6 for example, thereby achieving the effect of re-tightening. Consequently, the hand-turning wheel 81 and the threaded handwheel 82 with an interference fit may achieve installation of the connector 30 with two structures.

### Embodiment 10

The present application in the embodiment 10 further provides a gas appliance, including the pressure reducing valve 100 according to any one of Embodiments 1 to 9 described above.

The gas valve is installed on the gas appliance, configured to deliver gas to the gas appliance, since the air inlet part 12 and the pressure regulating part 11 in the pressure reducing valve 100 are integrated as a single unit, the molding cost of the entire valve body 10 may be reduced, and assembly efficiency may be simultaneously improved, further, the sliding rod 25 may be improved, and it also has the effect of adjusting the air inflow rate.

The technical means disclosed in the solution of the present application are not limited to the technical means disclosed in the above-mentioned implementation modes, but also include technical solutions formed by any combination of the above technical features. It should be pointed out that for those of ordinary skill in the art, without departing from the principle of the present application, several improvements and modifications may also be made, and these improvements and modifications are also considered to be within the protection scope of the present application.

## Claims

1. A pressure reducing valve (100), comprising:
a valve body (10), comprising a pressure regulating part (11) and an air inlet part (12), the pressure regulating part (11) being configured to connect to a cooking apparatus, and the air inlet part (12) and the pressure regulating part (11) being integrated as a single unit;
a pressure regulating structure (20), comprising a film(21), a first elastic member (22), a core shaft (23), a connecting rod (24) and a sliding rod (25), the film (21), the first elastic member (22) and the core shaft (23) being disposed in the pressure regulating part (11), a first end of the connecting rod (24) being pivotably connected to the core shaft (23), a middle portion of the connecting rod (24) being pivotably connected to the valve body (10), a second end of the connecting rod (24) being pivotably connected to the sliding rod (25), and the sliding rod (25) being slidably disposed in the air inlet part (12); and
a connector (30), connected to an end of the air inlet part (12) away from the pressure regulating part (11) and configured to connect to a gas cylinder.

2. The pressure reducing valve (100) according to claim 1, wherein the connecting rod (24) has a first pivot point (241) relative to the sliding rod (25), a first linear distance formed by a free end of the sliding rod (25) and the first pivot point (241) is configured as L1, the connecting rod (24) has a second pivot point (242) relative to the core shaft (23), a second linear distance formed by the first pivot point (241) and the second pivot point (242) is configured as L2, and a ratio range of L1 :L2 is configured as 0.5 to 2.5.

3. The pressure reducing valve (100) according to claim 1 or 2, wherein the connector (30) comprises a first connector (31) and a second connector (32), the first connector (31) is provided with an external thread for connecting to the air inlet part (12), and the second connector (32) is disposed outside the air inlet part (12) for connecting to the gas cylinder,
wherein an end of the first connector (31) for connecting to the second connector (32) is provided with a glue accommodating groove (311).

4. The pressure reducing valve (100) according to claim 1 or 2, wherein the sliding rod (25) is provided with a flow channel groove (251) extending along a length direction of the sliding rod (25).

5. The pressure reducing valve (100) according to claim 1 or 2, wherein the connector (30) comprises:
a housing (33), the housing (33) being provided with an airflow channel (331);
an over-flow protection structure (34), disposed in the airflow channel (331), the over-flow protection structure (34) being configured to, in response to a flow rate at an air inlet end (332) of the connector (30) being greater than a preset flow rate, at least cause a reduction in a flow capacity of the airflow channel (331), and being configured to open the airflow channel (331) in response to an air pressure in the valve body (10) reaching balance.

6. The pressure reducing valve (100) according to claim 1 or 2, wherein the pressure reducing valve (100) further comprises a first buffer member (40), and the first buffer member (40) is provided at an end of the sliding rod (25) facing the connector (30).

7. The pressure reducing valve (100) according to claim 1 or 2, wherein the pressure reducing valve (100) further comprises a second buffer member (50) and/or a third buffer member (60);
an end of the sliding rod (25) for connecting the connecting rod (24) is provided with a through hole (252), the second end of the connecting rod (24) is configured to pass through the through hole (252), an inner wall of the through hole (252) is provided with the second buffer member (50), and/or an outer wall of the second end of the connecting rod (24) is provided with the third buffer member (60).

8. The pressure reducing valve (100) according to claim 1 or 2, wherein the pressure reducing valve (100) further comprises an adjusting member (70), the adjusting member (70) is disposed in the air inlet part (12), the adjusting member (70) is disposed between the sliding rod (25) and the connector (30), and is threaded to the air inlet part (12).

9. The pressure reducing valve (100) according to claim 1 or 2, wherein the pressure reducing valve (100) further comprises a handwheel structure (80), the handwheel structure (80) is rotatably mounted outside the air inlet part (12) and the handwheel structure (80) comprises a hand-turning wheel (81) and a threaded handwheel (82) that are detachably engaged, the hand-turning wheel (81) is for driving the threaded handwheel (82) to rotate under the action of an external force, and the threaded handwheel (82) is configured to connect to the gas cylinder.

10. A gas appliance, comprising the pressure reducing valve (100) according to any one of claims 1 to 9.
